# EUROPEAN PATENT APPLICATION

(11) **EP 3 531 261 A1**
(43) Date of publication of application: **28.08.2019**
(21) Application number: 17863060.4
(22) Date of filing: 05.04.2017
(51) Int. Cl.: G06F 3/0484

(54) **METHOD AND APPARATUS FOR IMAGE DISPLAY, AND COMPUTER STORAGE MEDIUM**

(30) Priority: 20.10.2016 CN 201610913580
(71) Applicant: ZTE Corporation, Shenzhen, Guangdong 518057 (CN)
(72) Inventor: ZHUO, Junwei, Shenzhen Guangdong 518057 (CN)
(74) Representative: Brevalex
(86) International application number: PCT/CN2017/079503
(87) International publication number: WO 2018/072400

(57) **Abstract**

Method and apparatus for image display, and computer storage medium. The method comprises: acquiring handover information about an application program, wherein the handover information comprises current application program information and application program handover information (S101); determining, according to the application program handover information, whether the handover application program belongs to a pre-set target application program (S102); and if the handover application program belongs to the target application program, calling a pre-set target parameter display image (S103).

## Description

### CROSS-REFERENCE TO RELATED APPLICATION

The present application is based on and claims benefit of Chinese Patent Application No. 201610913580.2, filed on October 20, 2016, the contents of which are hereby incorporated by reference in its entirety.

### TECHNICAL FIELD

The present invention relates to the technical field of electronic devices, and in particular to a method and an apparatus for image display, and a computer storage medium.

### BACKGROUND

With continuous development and maturity of organic light-emitting display (OLED) technology, OLED screens have been favored by an increasing number of manufacturers due to characteristics such as lightweight, high brightness, and particularly, high color gamut coverage, which brings about a saturation causing various colors to look more gorgeous and vivid. However, the high saturation caused by the high color gamut coverage causes a display color of an image to be distorted when the image is displayed in some applications.

### SUMMARY

In order to solve existing technical problems, embodiments of the present invention provide a method and a device for displaying an image, and a computer storage medium.

The embodiment of the present invention provides a method for displaying an image, which includes the following operations.

Switch information about applications is acquired, where the switch information includes information about a current application and information about an application to be switched to;
it is determined whether the application to be switched to is one of at least one pre-set target application according to the information about the application to be switched to; and
when the application to be switched to is one of the at least one target application, calling pre-set target parameters to display an image.

The embodiment of the present invention further provides a device for displaying an image, which includes an acquisition module, a determination module and a first calling module.

The acquisition module is configured to acquire switch information about applications, where the switch information includes information about a current application and information about an application to be switched to.

The determination module is configured to determine, according to the information about the application to be switched to, whether the application to be switched to is one of at least one pre-set target application.

The first calling module is configured to call pre-set target parameters to display an image when the application to be switched to is one of the at least one target application.

The embodiment of the present invention further provides a computer storage medium, in which at least one program executable by a computer are stored. When being executed by the computer, the at least one program causes the computer to perform the method for displaying an image as provided above. That is, a set of instructions are stored in the computer storage medium, and when being executed, the set of instructions cause at least one processor to perform the method for displaying an image as described above.

One of the above technical solutions has the following advantages or benefits.

Switch information about applications is acquired, where the switch information includes information about a current application and information about an application to be switched to. It is determined, according to the information about the application to be switched to, whether the application to be switched to is one of at least one pre-set target application. When the application to be switched to is one of the at least one target application, pre-set target parameters are called to display an image. As such it can ensure an authenticity of image colors when the target application displays an image, thereby solving the problem of image color distortion, and enhancing visual experiences of users.

### BRIEF DESCRIPTION OF DRAWINGS

FIG. 1 is a flow diagram of a method for displaying an image according to an embodiment of the present invention.
FIG. 2 is a flow diagram of another method for displaying an image according to an embodiment of the present invention.
FIG. 3 is a flow diagram of yet another method for displaying an image according to an embodiment of the present invention.
FIG. 4 is a block diagram of a device for displaying an image according to an embodiment of the present invention.
FIG. 5 is a block diagram of another device for displaying an image according to an embodiment of the present invention.
FIG. 6 is a block diagram of yet another device for displaying an image according to an embodiment of the present invention.
FIG. 7 is a structural diagram of still another device for displaying an image according to an embodiment of the present invention.

### DETAILED DESCRIPTION

In order to make the technical problems to be solved, technical solutions and advantages of the present invention clearer, a detailed description will be made below in conjunction with the accompanying drawings and specific embodiments.

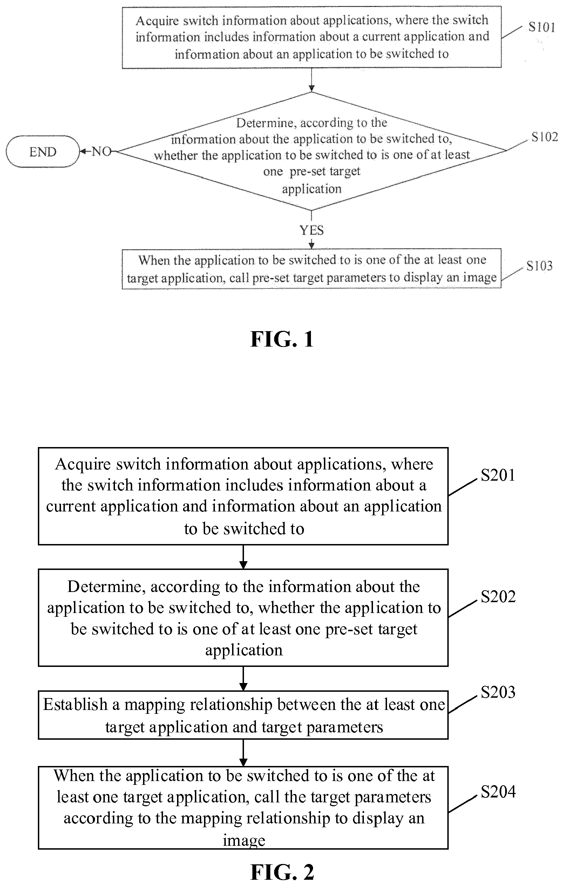

As illustrated in FIG. 1, an embodiment of the present invention provides a method for displaying an image, which includes the following operations.

At block S101, switch information about applications is acquired, where the switch information includes information about a current application and information about an application to be switched to.

At this block, when the application is switched, a terminal system acquires switch information about applications. The switch information includes information about a current application and information about an application to be switched to.

At block S102, it is determined, according to the information about the application to be switched to, whether the application to be switched to is one of at least one pre-set target application.

At this block, the application to be switched to can be determined according to the information about the application to be switched to is acquired at block S101. It is determined to call which parameter for displaying an image by determining whether the application to be switched to is one of at least one pre-set target application. In the embodiment, when the application to be switched to is one of the at least one target application, block S103 is executed; otherwise, the flow is ended.

In an embodiment, the above target application may include at least one of a photographic application or a gallery application. Because images in the photographic application and gallery application are most commonly used, the requirements for the image display are high.

At block S103, when the application to be switched to is one of the at least one target application, pre-set target parameters are called to display an image.

At this block, when the application to be switched to is the target application, pre-set target parameters are called to display an image. For example, in image display of a terminal device such as a cellphone, particularly a portrait display, a high saturation brought about by the high color gamut coverage of an OLED screen makes various colors to look more gorgeous and vivid. However, when a color such as a color of people is displayed, the excessively high saturation of red will result in significantly red skin color and severe distortion, and a visual experience of the user is affected. Moreover, there is a high probability of occurrence of the portrait display in the photographic application and gallery application. When the user takes photos with a camera and views photos of people in a gallery, it is required to optimize the displays of these two applications, that is, to optimize a skin color, so as to ensure an authenticity of the image display and enhance the visual experience of the user. However, in other applications, other parameters, such as pre-set default parameters, may be used for displaying an image due to a low probability involving a skin color of people.

In the embodiment, the above method may be applied to a terminal device such as a cellphone, a smart watch, a personal computer.

In the embodiment, switch information about an application is acquired, where the switch information includes information about a current application and information about an application to be switched to. It is determined, according to the information about the application to be switched to, whether the application to be switched to is one of at least one pre-set target application. When the application is one of the at least one target application, pre-set target parameters are called to display an image. As such it can ensure an authenticity of image colors, and also enhance visual experience of the user when the target application displays an image.

As illustrated in FIG. 2, an embodiment of the present invention provides another method for displaying an image, which includes the following acts.

At block S201, switch information about applications is acquired, where the switch information includes information about a current application and information about an application to be switched to.

At block S202, it is determined, according to the information about the application to be switched to, whether the application to be switched to is one of at least one pre-set target application.

At block S203, a mapping relationship between the at least one target application and the target parameters is established.

At this block, by establishing the mapping relationship between the at least one target application and the target parameters, when a terminal device is switched to the target application, it may quickly and accurately call the target parameters for displaying an image , thereby enhancing an operation efficiency of the system.

In a practical application, there is no sequence between the executions of block S203 and blocks S201 to S202.

At block S204, when the application to be switched to is one of the at least one target application, the target parameters are called according to the mapping relationship to display an image.

At this block, when the application to be switched to is one of the at least one target application, the system can quickly and accurately call, according to the mapping relationship between the at least one target application and the target parameters, the target parameters for displaying an image, thereby enhancing an operation efficiency of the system.

In an embodiment, the method further includes the following operation.

When the application to be switched to is not one of the at least one target application, pre-set default parameters are called to display an image.

In the embodiment, different parameters are called for displaying an image for different applications, thus display effect of an image and a visual experience of a user can be enhanced. For example, a user may obtain a better visual experience when the target parameters are called for displaying a skin color. However, for example, when an application is switched to a stock trading software, red indicating that stocks gain, shows dark due to low saturation. In this case, the pre-set default parameters are called for displaying an image, it can solve the problem that the red that indicates stocks gain shows dark due to low saturation, thereby a visual experience of the user is enhanced.

In an embodiment, before acquiring the switch information about the applications, the method further includes the following operation.

The target parameters and the default parameters are stored in a specified directory.

In the embodiment, to store the target parameters and the default parameters into a specified directory, a new folder is created under a path of vendor/qcom/proprietary/mm-core/display/ and is named qdcm. XML files generated by the target parameters and the default parameters are copied to a subdirectory, Andriod.mk file is added, and is stored in the directory of system/etc/. As such, it facilitates the system to load the XML files each time the system is booted.

In the embodiment, it can ensure an authenticity of an image color when the target application displays an image, and also enhance a visual experience of a user.

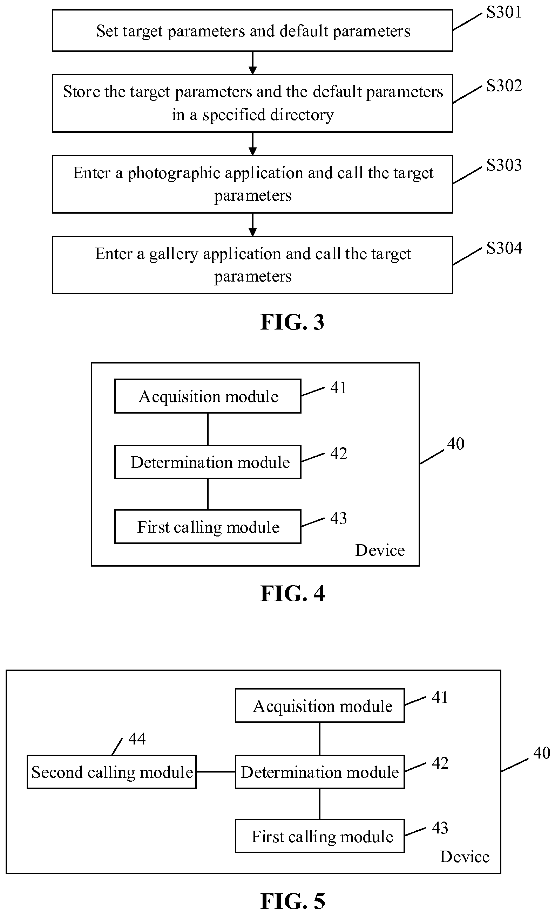

As illustrated in FIG. 3, an embodiment of the present invention provides another method for displaying an image, which includes the following acts.

At block S301, target parameters and default parameters are set.

At this block, a display debugging tool provided by the terminal device is used to particularly optimize the display of the skin color. The debugging may be performed in the same way as that of a cellphone as a comparison, which is good at the display of the skin color on the market. Generally, the particular optimization for the display of a skin color is performed mainly by decreasing a saturation of a tonal value of a range of a skin color, and a name and modeid are specified. For example, the target parameter may be named skin and specified modeid=1. The default parameter may be named defaults and specified modeid=0. Moreover, a XML file is generated by using the target parameters and the default parameters, which facilitates the system to load the XML file.

At block S302, the target parameters and the default parameters are stored in a specified directory.

At this block, to store the target parameters and the default parameters which have already generated the XML file into a specified directory, a new folder is created under a path of vendor/qcom/proprietary/mm-core/display/ and named qdcm, the XML file is copied to a subdirectory, Andriod.mk file is added, and specified to be stored to the directory of system/etc/. As such, it facilitates the system to load the XML file each time the system is booted.

At block S303, a photographic application is entered and the target parameters are called.

At this block, when the photographic application is entered, according to the mapping relationship between the at least one target application and the target parameters, the target parameters (that is, parameters of skin color display) are set in a callback function onresume to which an interface is entered, ColorManagerListener interface is implemented by using a class of activity, then ColorManager.connect(this,this) is called in the oncreate, mColorManager =ColorManager.getInstance(this.getApplication(),this,type) is called in a onConnected() method to obtain colormanager instance. Then an operation can be performed by using the instance and a current mode can be obtained: int[]value= mColorManager.getActiveMode().

activitymode is set: mColorManager.setActiveMode(mode) and modeid=1 is set. When the interface is exited, modeid=0 is set in a callback function onpause by using mColorManager.setActiveMode(mode). This process is supported by a display service provided by the system.

At block S304, a gallery application is entered and the target parameters are called.

At this block, when the gallery application is entered, according to the mapping relationship between the at least one target application and the target parameters, the target parameters (that are, parameters of skin color display) are set in a callback function onresume to which an interface is entered, ColorManagerListener interface is implemented by using a class activity. Then ColorManager.connect(this,this) is called in oncreate, and mColorManager=ColorManager.getInstance(this.getApplication(),this,type) is called in a method onConnected()to obtain colormanager instance. Then an operation can be operated by using the instance, and a current mode can be obtained: int[]value= mColorManager.getActiveMode() is obtained.

activitymode is set: mColorManager.setActiveMode(mode) and modeid=1 is set. When the interface is exited, modeid=0 is set in a callback function onpause by using mColorManager.setActiveMode(mode). This process is supported by a display service provided by the system.

In the embodiment, under the premise of applying a wide color gamut of OLED screen, when the photographic application and the gallery application display an image by using the above method, particularly the skin color display, an image color will not be distorted and ta visual experience of a user can be enhanced.

As illustrated in FIG. 4, an embodiment of the present invention provides a device for displaying an image, and the device 40 including an acquisition module 41, a determination module 42 and a first calling module 43.

The acquisition module 41 is configured to acquire switch information about applications, where the switch information includes information about a current application and information about an application to be switched to.

The determination module 42 is configured to determine, according to the information about the application to be switched to, whether the application to be switched to is one of at least one pre-set target application.

The first calling module 43 is configured to call pre-set target parameters to display an image when the application to be switched to is one of the at least one target application.

In an embodiment, as illustrated in FIG. 5, the device 40 further includes a second calling module 44 configured to call pre-set default parameters to display an image when the application to be switched to is not one of the at least one target application.

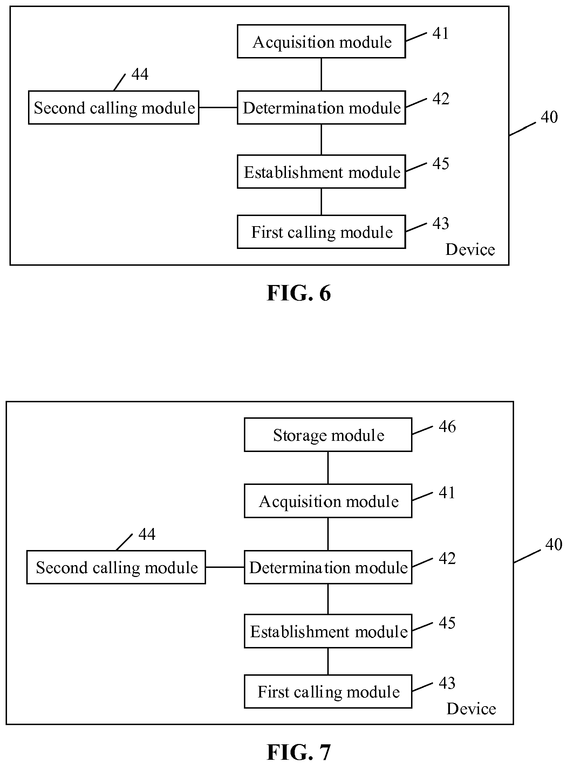

In an embodiment, as illustrated in FIG. 6, the device 40 further includes an establishment module 45 and a first calling module 43.

The establishment module 45 is configured to establish a mapping relationship between the at least one target application and the target parameters.

The first calling module 43 is configured to call pre-set target parameters according to the mapping relationship to display an image when the application to be switched to is one of the at least one target application.

In an embodiment, as illustrated in FIG. 7, the device 40 further includes a storage module 46 configured to store the target parameters and the default parameters in a specified directory.

In an embodiment, the target application includes at least one of a photographic application or a gallery application.

In the embodiment, the device 40 can implement the methods in the embodiments illustrated in FIG. 1 to FIG. 3. That is, the methods in the embodiments illustrated FIG. 1 to FIG. 3 can be implemented by the device 40, and can achieve the same benefits. In order to avoid repetitions, descriptions are omitted here.

In a practical application, the acquisition module 41, the determination module 42, the first calling module 43, the second calling module 44 and the establishment module 45 may be implemented by a processor (such as a central processing unit (CPU)), a micro control unit (MCU), a digital signal processor (DSP) or a field-programmable gate array (FPGA) of the device 40 for displaying an image, and the like. The storage module 46 may be implemented by the processor in combination with a memory in the device 40 for displaying an image.

Those skilled in the art may understand that all or part of the acts of the methods of the abovementioned embodiments may be implemented by hardware related to program instructions. The program may be stored in a computer-readable storage medium, and when being executed, includes the following acts.

Switch information about applications is acquired, where the switch information includes information about a current application and information about an application to be switched to;
it is determined, according to the information about the application to be switched to, whether the application to be switched to is one of at least one pre-set target application; and
when the application to be switched to is one of the at least one target application, pre-set target parameters are called to display an image.

In an embodiment, when the application to be switched to is not one of the at least one target application, pre-set default parameters are called to display an image.

In an embodiment, when the application to be switched to is one the at least one target application, before calling the pre-set target parameters to display an image, the method further includes the following operations.

A mapping relationship between the at least one target application and the target parameters is established;
the operation that when the application to be switched to is one of the at least one target application, pre-set target parameters are called to display an image, includes the following act.

When the application to be switched to is one of the at least one target application, the target parameters are called according to the mapping relationship to display an image.

In an embodiment, before acquiring the switch information about the applications, the method further includes the following act.

The target parameters and the default parameters are stored in a specified directory.

In an embodiment, the target application includes at least one of a photographic application or a gallery application.

The storage medium includes a read-only memory (ROM), a random access memory (RAM), a magnetic disk or an optical disk, etc.

The above are preferred embodiments of the present invention. It should be noted that any improvements and modifications can be made those skilled in the art without departing from the principle of the present invention and shall fall within the scope of protection of the present invention.

### INDUSTRIAL APPLICATION

A technical solution in the embodiments of the present invention is provided. Switch information about applications is acquired, where the switch information includes information about a current application and information about an application to be switched to. It is determined, according to the information about the application to be switched to, whether the application to be switched to is one of at least one pre-set target application. When the application to be switched to is one of the at least one target application, pre-set target parameters are called to display an image. As such it can ensure an authenticity of an image color when the target application displays an image.

## Claims

1. A method for displaying an image, **characterized in that** the method comprises:
acquiring switch information about applications, wherein the switch information comprises information about a current application and information about an application to be switched to;
determining, according to the information about the application to be switched to, whether the application to be switched to is one of at least one pre-set target application; and
when the application to be switched to is one of the at least one target application, calling pre-set target parameters to display an image.

2. The method of claim 1, wherein the method further comprises:
when the application to be switched to is not one of the at least one target application, calling pre-set default parameters to display an image.

3. The method of claim 1, wherein when the application to be switched to is one of the at least one target application, before calling the pre-set target parameters to display the image, the method further comprises:
establishing a mapping relationship between the at least one target application and the target parameters;
wherein calling the pre-set target parameters to display the image comprises:
calling the target parameters according to the mapping relationship to display an image.

4. The method of claim 2, wherein before acquiring switch information about the applications, the method further comprises:
storing the target parameters and the default parameters in a specified directory.

5. The method of any of claims 1-4, wherein the target application comprises at least one of a photographic application or a gallery application.

6. A device for displaying an image, **characterized in that** the device comprises:
an acquisition module, configured to acquire switch information about applications, wherein the switch information comprises information about a current application and information about an application to be switched to;
a determination module, configured to determine, according to the information about the application to be switched to, whether the application to be switched to is one of at least one pre-set target application; and
a first calling module, configured to call pre-set target parameters to display an image when the application to be switched to is one of the at least one target application.

7. The device of claim 6, wherein the device further comprises:
a second calling module, configured to call pre-set default parameters to display an image when the application to be switched to is not one of the at least one of target application.

8. The device of claim 6, wherein the device further comprises:
an establishment module, configured to establish a mapping relationship between the at least one target application and the target parameters; and
the first calling module, configured to call the target parameters according to the mapping relationship to display an image when the application to be switched to is one of the at least one target application.

9. The device of claim 7, wherein the device further comprises:
a storage module, configured to store the target parameters and the default parameters in a specified directory.

10. The device of any of claims 6-9, wherein the target application comprises at least one of a photographic application or a gallery application.

11. A computer storage medium, in which a set of programs are stored, and when being executed, cause at least one processor to perform the method for displaying an image of any of claims 1-5.
